# EUROPEAN PATENT SPECIFICATION

(11) **EP 4 399 375 B1**
(45) Date of publication and mention of the grant of the patent: **18.03.2026**
(21) Application number: 22776955.1
(22) Date of filing: 09.09.2022
(51) Int. Cl.: E04C 2/40, B21D 47/01, E04C 3/08, E04C 3/29, E04C 3/36, E04H 9/02, E04B 1/24, E04B 1/30, E04C 3/04

(54) **MODULAR STRUCTURAL COMPONENT, MODULAR STRUCTURAL SYSTEM AND A METHOD OF MANUFACTURING A TENSION ELEMENT AND/OR A COMPRESSION ELEMENT OF A MODULAR STRUCTURAL COMPONENT**
MODULARES STRUKTURBAUTEIL, MODULARES STRUKTURSYSTEM UND VERFAHREN ZUR HERSTELLUNG EINES SPANNELEMENTS UND/ODER EINES DRUCKELEMENTS EINES MODULAREN STRUKTURBAUTEILS
ÉLÉMENT STRUCTURAL MODULAIRE, SYSTÈME STRUCTURAL MODULAIRE ET PROCÉDÉ DE FABRICATION D'UN ÉLÉMENT DE TENSION ET/OU D'UN ÉLÉMENT DE COMPRESSION D'UN ÉLÉMENT STRUCTURAL MODULAIRE

(30) Priority: 09.09.2021 LU 500643
(43) Date of publication of application: 17.07.2024
(73) Proprietor: Cistron Innovations Sàrl, 1724 Luxembourg (LU)
(72) Inventor: FELIX, Claude Auguste Roland, 3833 Schifflange (LU)
(74) Representative: Marks & Clerk LLP
(86) International application number: PCT/EP2022/075077
(87) International publication number: WO 2023/036916

(56) References cited:
- WO-A1-2020/125916
- CN-A- 110 847 368
- JP-A- 2004 068 569
- US-A1- 2018 079 151

## Description

### FIELD OF INVENTION

The invention belongs to the field of structural construction and, more particularly, to modular structural beams and columns used for constructing or renovating buildings.

### BACKGROUND TO INVENTION

Structural bracings, notably the arrangement of structural beams or girders and columns, are commonly employed in the construction and the renovation of buildings, bridges and similar structures, besides numerous other applications of varying scale.

Structural steel has been widely adopted for structural components used in building construction, with enhanced rigidity, reduced overall volume and non-flammability relative to natural wood. Known structural components still adhere to the same, historic paradigm of integral construction, whether they be hewn from natural wood or cast from a metallic alloy, wherein the material properties of steel and casting techniques permit a more complex and significantly thinner cross-section relative to organic alternatives.

Consequently, there have been relatively few advances in structural component design, beside new alloy formulations and cross-sectional geometry variations to maintain or enhance levels of rigidity with the same volume of material or less.

A first and enduring disadvantage is that the weight of such components requires substantial mechanical lifting and power handling resources. For instance, a steel beam of 12 inches by 40 feet (for the whole description, 1 inch = 0.0254 meters and 1 foot = 0.3048 meters), as typically used in the construction of a residential dwelling, weighs in excess of 900 kilograms. These resources attract their own further and consequential requirements, such as a working base on which to stand a crane, and disadvantages, such as a significant manual handling risk.

A second disadvantage is that the load bearing capacity of such longstanding designs is constraining the freedom of structural design, for instance wherein beam weight limits the strength and/or height of structures, likewise their span in bridging applications.

There is therefore a longstanding requirement for improved structural components that maintain the structural bracing function of integral components, but which reduce mechanical lifting and power handling requirements substantially. The development of solutions is hindered by a longstanding bias against non-integral designs.

WO 2020/125916 A1 discloses a modular structural component comprising an elongate tension element comprising opposed faces and a mesh of through-apertures; and a pair of elongate compression elements, each for securing to a respective face of the tension element, wherein a face of each compression element comprises a pattern of studs, wherein each pattern is formed and each stud thereof is shaped for engaging a respective through-aperture of the mesh, wherein the modular structural component is a beam or a column.

### SUMMARY OF INVENTION

The invention improves the versatility and handling of structural bracings by providing modular structural components as columns and/or beams capable of interfacing by bridging members, wherein each modular structural component consists of more than one material, each of which has different properties and, when combined in the manner disclosed herein, collaborates mechanically and functionally with the other to form a homogeneous structural product.

According to an aspect of the invention, a modular structural component comprises an elongate tension element, having opposed faces and a mesh of through-apertures, and a pair of elongate compression elements, each for securing to a respective face of the tension element, wherein a face of each compression element comprises a pattern of studs, and wherein each pattern is formed and each stud thereof is shaped for engaging a respective through-aperture of the mesh.

The tension element is made from a material with properties particularly suited to withstand tension forces and stress, whilst the compression elements are made from another material with properties particularly suited to withstand compression forces and stress. Accordingly, the tension element may be made from one or more material(s) selected from steel, iron, aluminium, copper, nickel, zinc, lead, brass, bronze, tin, chromium, titanium, tungsten, bismuth and niobium; from alloys thereof such as stainless steel, hardened steel, carbon steel, engineering steel, wrought iron, nitinol and elinvar; and from composite materials with relevant properties.

Accordingly still, each compression element may be made from one or more organic, composite and/or processed material(s) such as natural or laminated wood e.g. plywood, compressed sawdust, fibre-reinforced composites, natural fibre composites, concrete, fibre-reinforced concrete, Ethylene Propylene Diene Monomer ('EPDM') rubber and clay.

Embodiments of the modular structural component contemplate through-apertures with at least two different geometrical shapes, to maximise the useful area for the mesh in the tension element. In a preferred embodiment, studs of a first compression element in the pair may comprise a first geometrical shape and studs of the second compression element may comprise a second geometrical shape, but permutations and combinations are considered. For example, the first geometrical shape may be a rhomboid and the second geometrical shape may be a triangle.

It will be clear from the inventive principles disclosed herein, that the modular structural component is a beam or a column.

In beam embodiments of the modular structural component, the elongate tension element may comprise a web portion extending from a flange portion, the web comprising the opposed faces with the mesh, wherein an underside of each elongate compression element is located atop the flange portion on a respective side of the web portion in use, for enhanced support as its studs engage through-apertures of the web in use.

In a variant of this embodiment, the web portion may project equidistantly beyond the flange portion along the main axis of the component, the tension element further comprising a pair of slots extending from a same longitudinal edge and orthogonally thereto, each slot located adjacent a respective end of the flange portion. The slot in this embodiment provides a simple interface to facilitate gravity-based mechanical assembly with a bridging member disclosed herein and/or embodiments of the modular structural component as a column.

The modular structural component comprises at least three tension elements, wherein each tension element is arranged parallel and equidistantly from the other tension elements, symmetrically about a common longitudinal axis. This arrangement usefully results in an equal distribution of the load bearing capacity and tensile strength of the component about its radius.

A preferred embodiment comprises four tension elements arranged according to the above fundamental principle, but wherein each tension element is non coplanar relative to another, thereby defining two pairs of parallel and offset tension elements, each pair orthogonal to the other. This arrangement maintains the equal distribution of the load bearing capacity whilst enhancing the tensile strength of the column with the additional tension element.

In a variant of this embodiment, an oblong end portion of each tension element is cut off adjacent the common longitudinal axis, thereby defining an open and box-sectioned space at an end of the component, wherein the space is centred about the common longitudinal axis. This configuration advantageously provides a through-passage for an end portion of a transverse modular structural component used as a beam, from four directions corresponding respectively to the plane of each tension element in this beam component.

At least one end of each tension element in a column embodiment may be usefully configured with a mounting section coplanar with the tension element, for securing same to another modular structural component, particularly a beam embodiment of the component, orthogonally to the common longitudinal axis.

In beam embodiments of the modular structural component, the transversal edge of each compression element most proximate the common longitudinal axis is preferably chamfered according to the angle defined by and between adjacent tension elements of the beam, e.g. either 60 degrees in the case of the beam component with three tension elements or 45 degrees in the case of the beam component with four tension elements, in order to provide compressive strength from the beam component outer edge to the common axis centrally thereof.

According to another aspect of the invention, in addition to the modular structural component of the previous aspect of the invention, a bridging member is also provided for securing an end portion of the modular structural component either to another modular structural component located adjacent thereto co-axially therewith, and/or to secure that end portion of the modular structural component to an underlying surface, the bridging member being substantially planar and comprising a set of opposed mounting faces, wherein either mounting face is securable to an end portion of the modular structural component in use.

An embodiment of this bridging member may consist of a pair of symmetrical mounting plates, each mounting plate comprising a respective mounting face.

Embodiments of the bridging member may comprise flanges along the opposed longitudinal edges of each mounting face, with each flange extending outwardly of the member by a dimension corresponding to a thickness of the compression component, wherein a lateral edge of each compression component abuts a respective flange in use, to facilitate guidance of elements during assembly and bracing the modular structural component vertically.

Embodiments of the bridging member that are particularly suited for use with beam embodiments of the modular structural having slots, may further comprise an elongate stud extending orthogonally and outwardly therefrom and shaped complementarily with the tension element slot.

In beam embodiments of the modular structural component incorporating a flange, the end portion of the modular structural component securable to the bridging member is preferably the web portion projecting beyond the flange portion.

According to a further aspect, a foot member is also provided for securing an end portion of the modular structural component to an underlying surface, e.g. a structural wall, lintel or other structure underlying and supporting the modular structural component in use.

The foot member comprises at least one mounting section extending orthogonally from a base plate along a main axis thereof, the foot member locating, in use, intermediate an underside of the modular structural component and the surface underlying the modular structural component.

Embodiments of the foot member may be compatible with an assembly of modular structural component and bridging member, and usefully comprise means to guide that assembly relative to foot member mounting section(s) for facilitating guidance of the three elements relative to each other during system assembly and bracing the modular structural component vertically still further.

In a variant specifically for use with embodiments of the bridging member comprising flanges, a topside of the base plate may further comprise longitudinal channels located on either side of the or each mounting section. Each channel can usefully lodge either the underside of an end portion of a compression element projecting beyond a flange portion of the tension element, or the underside of a longitudinal flange of a bridging member secured to the tension element, in either case facilitating guidance of elements during assembly and bracing the modular structural component laterally.

According to a further aspect, a modular structural system is provided, which comprises at least a first modular structural component as disclosed herein, and at least a first bridging member fastened to an end of the first modular structural component. A second modular structural component may then be fastened to another end of the at least first modular structural component, and/or at least a second bridging member may be fastened to the at least first bridging member and the at least first modular structural component.

It will be readily understood by the skilled reader, that embodiments of the system are as numerous as the various embodiments of modular structural components and bridging members described herein, and the combinations of same in numbers and dispositions required to brace a particular structure, within the scope of the appended claims.

According to yet another aspect of the invention, a method of manufacturing the embodiments of modular structural component and/or bridging members is provided, comprising steps of obtaining an electronic file representing a configuration of a product, including a surface configuration or volume configuration of the product, wherein the product is the tension element and/or the compression element and/or the bridging member; and controlling an additive manufacturing apparatus to manufacture, over one or more additive manufacturing steps, the product according to the configuration of the product represented in the electronic file.

Compared with the prior art, the modular structural component of the invention advantageously dispenses with heavy goods transportation like articulated trucks, likewise with specialist equipment for lifting components into building structures. The capacity to assemble modular components from their constituent elements, and relatively complex bracing systems out of modular components, within existing buildings significantly reduces site preparation or adaptation work and the associated costs of structural renovation work.

### BRIEF DESCRIPTION OF DRAWINGS

Figure 1 is a lateral view of a tension element for a modular structural component according to an embodiment of the invention.
Figure 2 is a lateral view of a pair of compression elements for the modular structural component embodiment of Figure 1.
Figure 3 is a lateral view of a tension element for a modular structural component according to another embodiment of the invention.
Figure 4 is a lateral view of a pair of compression elements for the modular structural component embodiment of Figure 3.
Figure 5 is a top view of either embodiment shown in Figures 1 to 4.
Figure 6 is an end view of either embodiment shown in Figures 1 to 4.
Figure 7 is a lateral view of a first embodiment of a bridging member for connecting modular structural components shown in Figures 1 to 6.
Figure 8 is a lateral view of the bridging member of Figure 7 secured to a tension element shown in Figures 1 to 6.
Figure 9 is an isometric view of a second embodiment of a bridging member for connecting modular structural components shown in Figures 1 to 6.
Figure 10 is an end view of the bridging member of Figure 9 secured to a modular structural component shown in Figures 1 to 6.
Figure 11 is a lateral view of a foot member for use with either embodiment of the bridging member shown in Figures 7 to 10.
Figure 12 is an end view of the foot member of Figure 11 secured to the bridging member and modular structural component assembly of Figure 10.
Figure 13A is a top view of the assembly shown in Figure 12.
Figure 13B shows a detail of an alternative and antiseismic embodiment of the foot member of Figures 11 and 12 in an assembly as shown in Figure 13A.
Figure 14 illustrates a system of modular structural components shown in Figures 1 to 13B.
Figure 15A comprises lateral views of a tension element for a modular structural component according to a further embodiment of the invention, self-connectable to another structural component.
Figure 15B comprises lateral and top views of an alternative embodiment of the tension element of Figure 15A.
Figure 16A illustates the assembly in self-connection of tensions elements as shown in Figure 15B with complementary compression elements of the invention.
Figure 16B comprises lateral and top views of modular structural components shown in Figure 16A after assembly.
Figures 17 and 18 provide end views of respective embodiments of a tension element, wherein the modular structural component is a column.
Figures 19 and 20 are respectively an end view and a side elevation of an alternative embodiment of the modular structural component of Figure 18, configured with a base plate.
Figure 21 is a side elevation of a system combining tension elements shown in Figures 1 to 9 and 19.
Figure 22A is a side elevation of an alternative embodiment of the modular structural component of Figures 20 and 21.
Figure 22B is a side elevation of a system combining tension elements shown in Figures 20 to 22A.
Figure 23 illustrates a key member used in the system of Figure 21 or 22B.
Figure 24 shows the system of Figure 21 with some compression elements secured to tension elements.
Figures 25A to 25D illustrates alternative configurations of compression elements in alternative configurations of the systems shown in Figures 21 to 24.

### DETAILED DESCRIPTION OF DRAWINGS

A detailed description of modular structural components and systems assembled from same is given below in combination with the schematic diagrams, showing embodiment(s) of the invention. It should be appreciated that those skilled in the art can modify the invention described herein, within the scope of the appended claims, while still achieving the advantageous effects of the invention. Therefore, it should be appreciated that the following description is understood by those skilled in the art to not limit the invention.

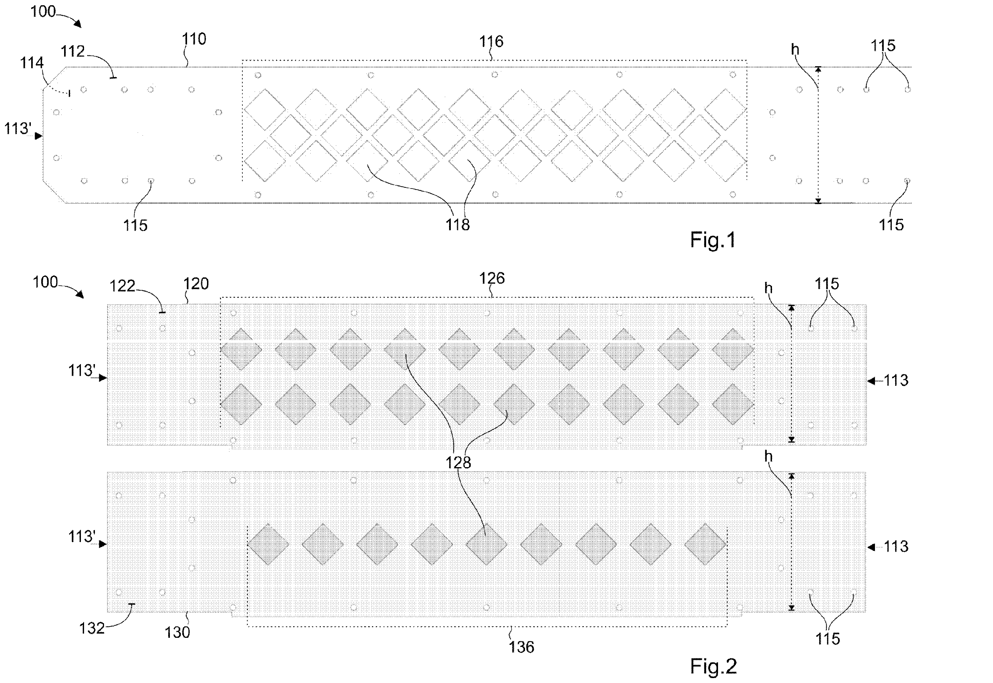

With reference to and as shown in Figures 1 and 2, a first embodiment of a modular structural component 100 comprises an elongate tension element 110, which is rectilinear and substantially planar, having opposed longitudinal faces 112, 114 and a mesh 116 of through-apertures 118 between the faces. In this example, the number and arrangement of through-apertures 118 defines a rectangular mesh 116 with three rows of rhomboid through apertures 118, arranged equidistantly from each other in quincunx, symmetrically relative to a geometrical centre of the tension element. These through-holes reduce the tension element's overall weight, relative to a solid version without mesh, without jeopardizing its potential bearing capacity.

Opposed longitudinal end portions of the tension element 110, each generally intermediate the mesh 116 and a transversal edge 113, 113' of tension element, are configured with a plurality of boltholes 115 arranged as a parallelogram circumventing the end portion, wherein the boltholes are engaged by fasteners in use.

The modular structural component 100 further comprises, in use, a pair of elongate compression elements 120, 130, wherein each compression element 120, 130 is rectilinear and substantially planar, and a longitudinal face of which is secured to a respective longitudinal face 112, 114 of the tension element 110.

The tension element 110 and the compression elements 120, 130 are generally rectangular. A height *h* of each compression element 120, 130 corresponds generally to the height *h* of the tension element, wherein the element height is the dimension between its opposed longitudinal edges. A total length of each compression element 120, 130 is shorter than the total length of the tension element, being the dimension between its opposed ends 113, 113' along the main axis. Opposed longitudinal end portions of each compression element 120, 130 are accordingly configured with a plurality of through-bores 115 disposed complementarily with at least some of the tension element through-bores 115, and which are engaged by the same fasteners as the tension element 110 in use.

The longitudinal face 122, 132 of each compression element 120, 130 intended for securing against the respective face 112, 114 of the tension element 110, comprises a respective pattern 126, 136 of studs 128. The pattern of each compression element is formed, and each stud thereof is shaped, complementarily with the mesh 116 for engaging a respective through-aperture 118 thereof. The patterns are formed for co-locating each stud with a respective through-aperture of the mesh and engaging the stud therein when the compression element is secured to the tension element.

In this first example, the number and arrangement of rhomboid studs 128 on the first compression element 120 defines a pattern 126 consisting of two rows of rhomboid studs 128, arranged equidistantly from each other and symmetrically relative to a geometrical centre of the compression element 120, corresponding respectively to the top and bottom rows of the mesh 116. The number and arrangement of rhomboid studs 128 on the second compression element 130 defines a pattern 136 consisting of a single row of rhomboid studs 128 arranged equidistantly from each other, symmetrically relative to a geometrical centre of the compression element 130, corresponding to the central row of the mesh 116.

Accordingly, when the studded longitudinal face 122, 132 of each compression element 120,130 is placed flush against a respective longitudinal face 112, 114 of the tension element 110, all through-apertures 118 of the mesh 116 are engaged by a respective stud 128, and each stud 128 meets a non-patterned aspect or portion of the opposite compression element's face.

The studded longitudinal face 122, 132 of each compression element 120,130 may optionally be coated with an adhesive, for example epoxy resin, to reinforce further the homogeneous load bearing of the structural component 100. The tension and compression elements are in any case secured to each other by bolts and nuts engaging all co-located and co-axial boltholes 115, whereby the entire component forms one homogeneous entity with all elements load bearing as one.

It is preferable however, that studs 128 engage an equal surface or volume of the tension element 110 on each side thereof, for distributing and balancing the load-bearing capacity of the compression elements 120, 130 substantially equally across the component.

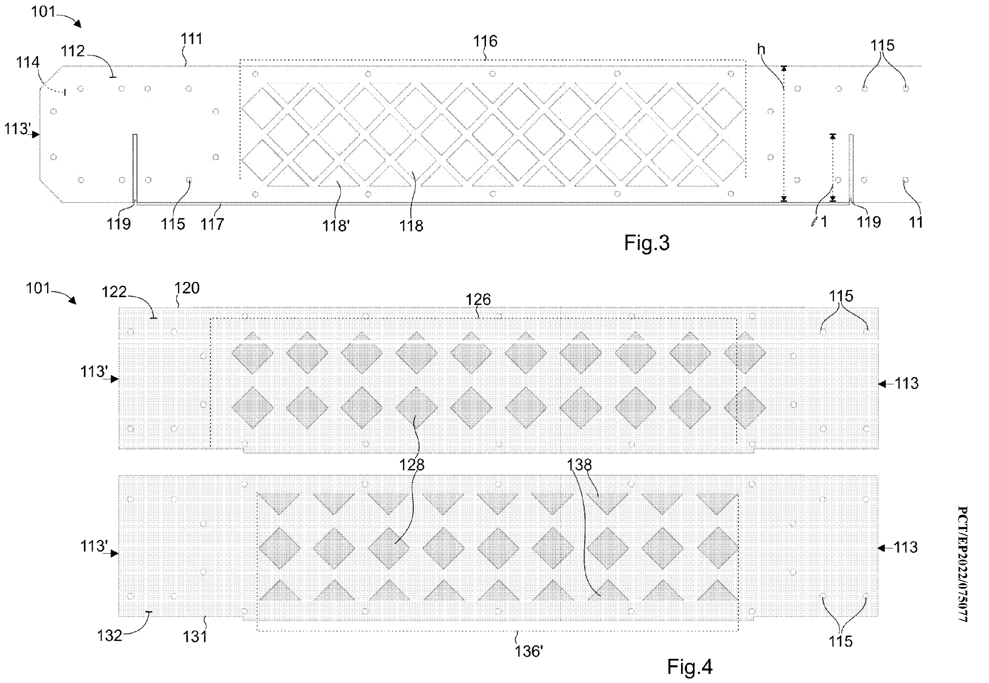

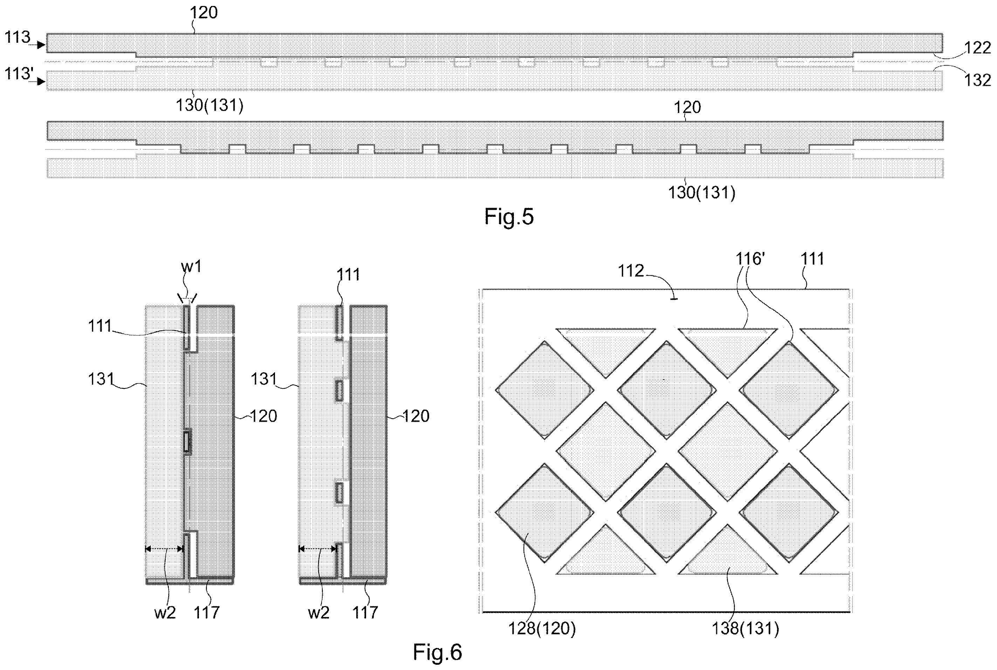

Accordingly, with reference and as shown in Figures 3 to 6 now, wherein like numerals reference like features, a second embodiment of a modular structural component 101 comprises a tension element 111 and a pair of compression elements 120, 131 wherein the mesh and complementary patterns comprise through-apertures of two different geometrical shapes.

In this embodiment, the mesh 116 comprises the arrangement of rhomboid through-apertures 118 previously described, and two additional rows of through-apertures 118' shaped as triangles, wherein each triangle 118' corresponds to a half-rhomboid with its longest side nearest a longitudinal edge of the mesh 116, located equidistantly and intermediate two rhomboid through-apertures of each quincunx. This configuration of through-holes reduce the tension element's weight by substantially a fifth, still without jeopardizing its potential bearing capacity.

The modular structural component 101 in this embodiment further comprises the same compression element 120 with the same pattern 126 of rhomboid studs 128 as previously described, and a second compression element 131 with a different pattern 136' of different studs 128, 138. This different pattern 136' consist of the single row of rhomboid studs 128 previously described, and two additional rows of triangular studs 138 in correspondence with the two additional rows of triangular through-apertures 118'.

In all embodiments described, each stud 128, 138 extends from a longitudinal face 122, 132 of a compression element 120, 130, 131 orthogonally thereto, by a dimension *w1* corresponding to at least a thickness or width of the tension element 110 between its opposed longitudinal faces 112, 114.

In this embodiment still, the tension element 111 comprises a flange 117 extending along and centrally of the lower edge of the opposed longitudinal faces 112, 114, which therefore form a web comprising the mesh 116', the elongate tension element 111 being effectively configured as a single-flanged I-beam. The flange 117 projects equidistantly on either side of the web, by a dimension corresponding substantially to a thickness or width w2 of a compression element 120, 131, wherein the underside of each compression element 120, 131 rests upon the flange on a respective side of the tension element 111 in use.

The flange 117 is shorter than the tension element 111 whereby the web portion of the tension element 111 projects equidistantly beyond the opposed edges of the flange. A slot 119 is provided immediately adjacent each flange edge, which extends from the same lower edge of the opposed longitudinal faces 112, 114 and orthogonally thereto, wherein each slot 119 is therefore proximate a respective transversal end 113, 113' of the tension element 111.

In this embodiment, each slot 119 has a length /*1* corresponding to substantially half the transversal dimension, or height, of the tension element 110, and a width corresponding to substantially its width *w1*. Each slot 119 provides a simple interface to facilitate gravity-based mechanical assembly with embodiments of a bridging member and/or of the modular structural component as a column, described hereafter.

When a distance to be spanned requires the use of two or more modular structural components arranged in a line, the components may be secured to one another longitudinally using a bridging member. At its simplest, such a bridging member is substantially planar like the modular structural component 110, 111 and thus comprises a set of opposed faces, with a set of boltholes configured for co-location with at least some of the boltholes 115 of the structural component, for fastening both together.

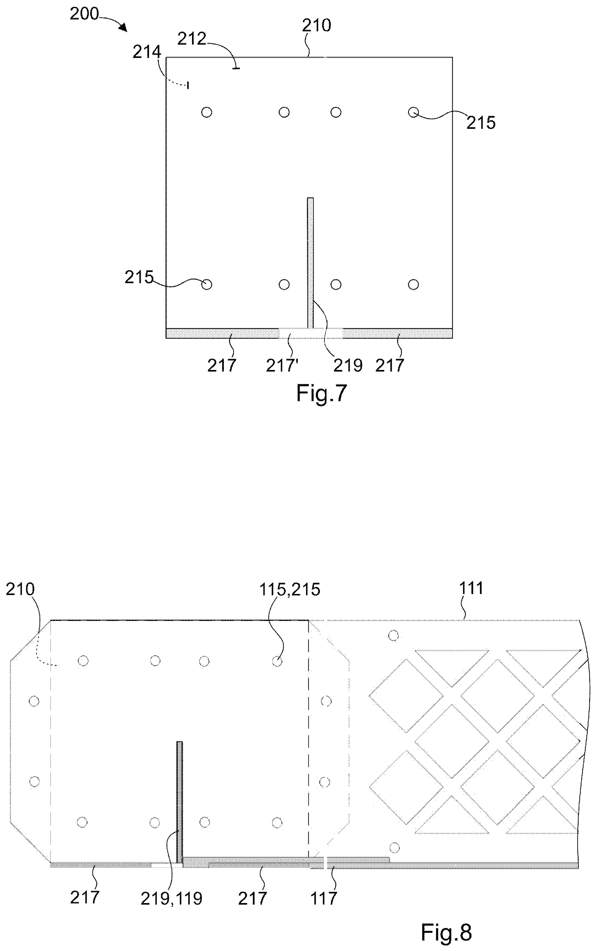

With reference to Figures 7 and 8, a first embodiment of a bridging member 200 is shown, which comprises a mounting plate 210 defining a set of opposed mounting faces 212, 214 with a set of boltholes 215 configured for co-location with the longitudinal rows of boltholes 115 of a structural component 110, 111.

The bridging member 200 comprises two elongate studs 219, one located centrally of each mounting face 212, 214 and extending from a longitudinal edge thereof and orthogonally thereto. Each stud 219 is shaped complementarily with the tension element slot 119 and projects equidistantly on either side of the mounting, by a dimension corresponding substantially to a thickness or width *w1* of a tension element 111, so that a bridging member stud 219 aids in positioning the tension element 111 relative to the bridging member, and interlocks with its slot 119, in use.

In this embodiment, a central portion 217' of the mounting plate 210 configured with the studs 219 is not flanged, but two flange portions 217 extend equidistantly and symmetrically from that central portion, along the same longitudinal edge of the mounting plate 210 as the studs 219. The flange portions 217 again project equidistantly on either side of the mounting plate 210, by a dimension corresponding substantially to the same thickness or width *w2* of a compression element, wherein the underside of at least an end portion of each compression element may rest upon the flange 217 on a respective side of the bridging member 200 in use.

This embodiment of the bridging member 200 is particularly suited for use with an embodiment of the modular structural component 110 wherein the securable end is the portion of tension element projecting beyond the flange 117, as the bridging member and its flange 217 can be dimensioned so that the transversal edge of the component flange 117 abuts the transversal edge of the bridging member flange 217 in use, for aiding further in positioning the tension element 111 relative to the bridging member.

In use, either end portion of either face 112, 114 of a tension element 110, 111 of a first modular structural component 100, 101 may be abutted to either face 212, 214 of the bridging member 200, and secured thereto with engaging fasteners through the combination of co-axially aligned tension element boltholes 115 and bridging member boltholes 215.

Under this principle of assembly, for a distance to be spanned by two or more modular structural elements 100, end portions of tension elements meeting at the or each bridging member are abutted on opposite faces of the bridging member 200. The tension elements are again secured to the bridging member with engaging fasteners through the combination of co-axially aligned boltholes 115 of both tensions elements and the intermediate bridging member boltholes 215.

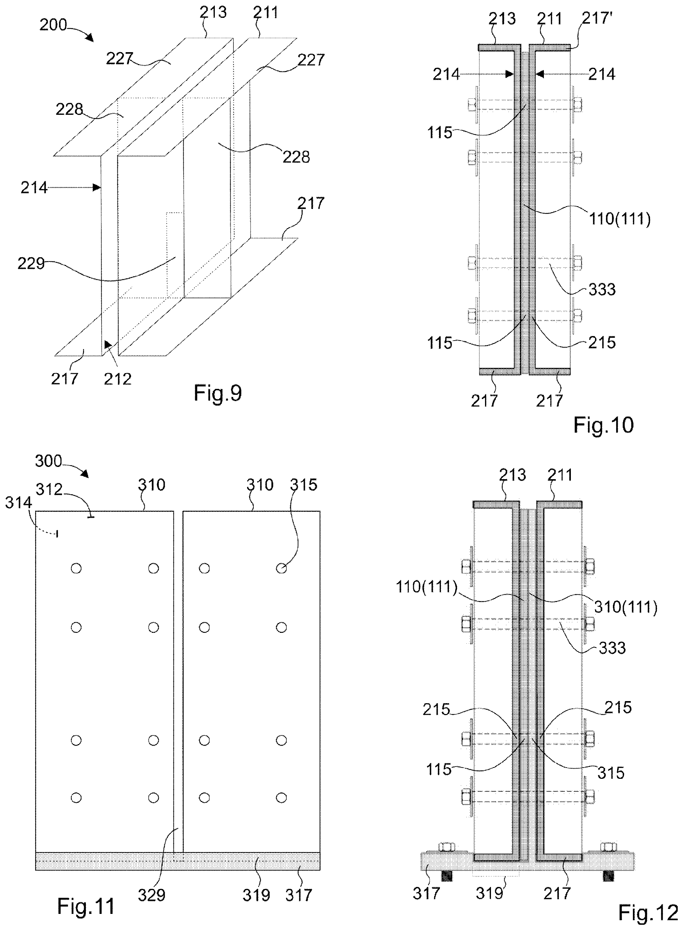

With reference to Figures 9 and 10 now, wherein like numerals reference like features, a second embodiment of a bridging member 200 is shown, which comprises two mounting plates 211, 213 that are disposed parallel to each other and secured to one another by a transverse stud 229. The transverse stud 229 extends from a lower edge of each mounting plate at a median location, has a length dimensioned complementarily with the tension element slot 119, and has a width intermediate the mounting plates corresponding substantially to double the thickness or width w1 of a tension element 111.

Each mounting plate 211, 213 comprises opposed faces, wherein inner faces 212 of the mounting plates face each other, and outer faces 214 of the mounting plates face opposite one another, each mounting plate comprising a set of through-boltholes 215 configured for co-location with the boltholes 115 of the structural component 110, 111 as before.

In this embodiment, the bridging member 200 comprises a second flange 227 extending along the entire upper edge of each mounting plate 211, 213 parallel to the flange portions 217 extending along the lower edge. Each outer face 214 of a mounting plate 211, 214 comprises a median flange 228 extending between the first and second flanges 217, 227, parallel and substantially coplanar with the transverse stud 229, whereby flanges 217, 227, 228 of each outer face 214 therefore define substantially a H on its side.

In use, the end portion of a first tension element 110, 111 of a first modular structural component 100, 101 is slid between the inner mounting faces 212 of the mounting plates 211, 213, and the tension element slot 119 is engaged with the transverse stud 229. The end portion of a second tension element 110, 111 of a second modular structural component 100, 101 is slid between the inner mounting face 212 of one of the mounting plates and the first tension element already engaged with the member 200, and the slot 119 of the second tension element is again engaged with the transverse stud 229. The assembly of first and second tension elements and the bridging member 200 is then secured with engaging fasteners 333 through the combination of co-axially aligned boltholes 115 of both tension elements and the boltholes 215 of both mounting plates 211, 213.

The distance between the first and second flange 217, 227 corresponds substantially to the height *h* of a compression element 120, 130. The width of each of the first, second and median flanges 217, 227, 228 corresponds substantially to the width of a compression element 120, 130. As the length of a compression element corresponds substantially to the distance between the slots 119 proximate each end of a tension element, the extremity of each compression element 120, 130 of a modular structural fits snugly within the volume bounded by the combination of flanges 217, 227, 228 of each outer face 214.

When a bracing application requires an extremity of a modular structural component 100 to be supported by a surface, for instance a structural wall, the component extremity may be secured to a foot member interfacing it with that supporting surface. With reference to Figures 11 to 13B, wherein like numerals reference like features, embodiments of a foot member 300 are shown, configured for use with modular structural components 100, 111 and bridging members 200 substantially as shown and described with reference to Figures 9 and 10.

Each embodiment of the foot member 300 comprises a pair of coplanar mounting plates 310 jointly defining a set of opposed mounting faces 312, 314, having a set of boltholes 315 therein configured for co-location with the longitudinal rows of boltholes 115, 215 respectively of the structural component and the bridging member.

Each mounting plate 310 extends upwardly and orthogonally of a rectangular base plate 317, co-axially with a main axis of the base plate 317. A rectilinear slot 329 separates the mounting plates 310, extending from their upper edges distal the base plate down to the topside of the base plate 317. The slot 329 has a width intermediate the mounting plates corresponding to substantially a thickness of the transverse stud 229, so that the assembly of a structural component 100, 111 with a bridging member 200 as shown in Figures 9 and 10 can be slid and guided vertically onto the foot member 300, the base plate 317 locating, in use, intermediate the assembly of the modular structural component 100, 111 with the bridging member 200, and the surface underlying that assembly.

The topside of the base plate 317 comprises longitudinal channels 319 on either side of the mounting plates 310, parallel to the base plate main axis. Each channel 319 extends over the entire length of the bridging member 300 and has a width, intermediate the adjacent mounting face 312, 314 and a lateral edge portion 330 of the base plate, dimensioned to lodge the lower flange portions 217 of each mounting plate 211, 213 of the other bridge member 200, i.e. has a width corresponding substantially to the same thickness or width w2 of a compression element 120, 130, 131. Each lateral edge portion 330 of the base plate 317 includes a longitudinal row of through-holes 335 for securing the base plate to the underlying surface with suitable fasteners.

In use, the end portion of a tension element 110, 111 of a modular structural component 100, 101 which comes to rest upon an existing structural upright of a building, is slid between the inner mounting faces 212 of the mounting plates 211, 213 of the bridging member 200 of Figures 9 and 10, and the tension element slot 119 is engaged with the transverse stud 229. A second tension element is not present at this extremity of the system, leaving sufficient interstitial space between the inner mounting face of one of the mounting plates 211, 213 of the bridging member 200 and a face of the tension element end portion, to accommodate the mounting plates 310 of the foot member 300. The assembly is lowered over the foot member 300, wherein the transverse stud 229 of the bridging member 200 engages the foot member slot 329, which guides the assembly as it is lowered to eventually rest upon the topside of the base plate 317. The system comprising the tension element 110 and bridging member 200 assembly and the foot member 300 is secured with engaging fasteners 333 through the combination of co-axially aligned boltholes 115, 215, 315 of the three elements, and the system is secured to the underlying surface with engaging fasteners through the rows of through-holes 335 of the base plate.

Embodiments of the bridging member 200 and foot member 300 are considered, wherein the lower flange portions 217 of the bridging member 200 and the longitudinal channels 319 of the foot member are respectively configured with asymmetrical dimensions, to facilitate the handling and locating of components in use. In an example, a transversal width of the lower flange portion on one side of the bridging member 200 may be larger than the lower flange portion on its opposite side, with the longitudinal channel 319 correspondingly wider on one side of the foot member 300 than on its opposite side, this configuration advantageously helping a user to maintain the correct orientation of the bridging member 200 and foot member 300 one relative to the other, likewise relative to further bridging member 200 distal the surface on which the foot member 300 is located.

The foot member 200 is particularly useful in the structural alteration and/or refurbishment of an existing structure, wherein it is fixed to the existing structure with bolts to help maintain the modular structural component 100, 111 in place.

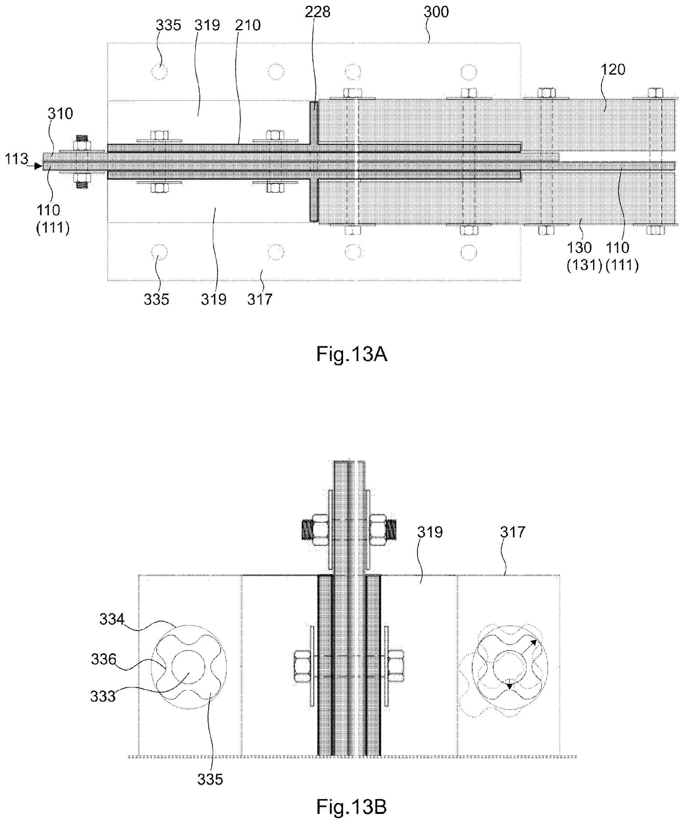

With reference to Figure 13B specifically, a detail of an alternative embodiment of the foot member 300 is shown, wherein the through-holes 335 of the base plate 317 are configured to provide a constrained degree of freedom of horizontal translation to the base plate, relative to fasteners 333 engaged therein with a washer 334 for securing the base plate during ordinary conditions. In the example, the configuration comprises a cross-shaped through-hole 335 with rounded edges 336 wherein, if seismic waves should submit the building to substantially horizontal shearing forces, the modular structural system can dampen such forces by translating about the fasteners 333 within the mechanical boundary defined by the cross shape edges 336, independently of the washer 334 maintaining the base plate 317 secured to the underlying surface, a principle which is illustrated figuratively in Figure 13B with two examples in dotted lines.

Advantageously, this embodiment of the base plate 317 retrofits anti-seismic properties to existing buildings without, that are renovated with a modular structural system according to the invention.

The skilled reader will appreciate from the present disclosure, the ease with which structural components and bridging members of the invention may be handled by construction workers and assembled into structural bracing systems of varying complexity.

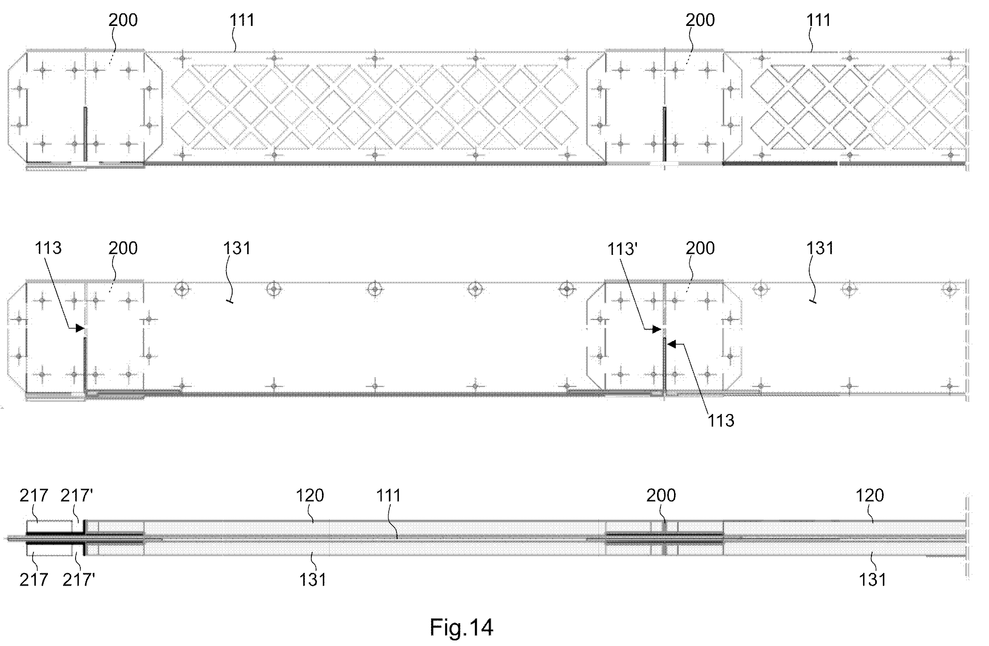

A simple example of a structural system combining tension elements 111 and bridging members 200, 300 is illustrated in Figure 14, in which three modular structural components 101 are shown longitudinally aligned with each other. Initially, three tension elements 111 are secured to two bridging members 200, one intermediate each aligned pair of elements 101, by engaging fasteners 333 through coaxially aligned boltholes 115, 215 between each element transversal end 113, 113' and the adjacent slot 119. The leftmost extremity of the leftmost tension element 111 is supported by and secured to a base plate member 300 likewise by engaging fasteners 333 through coaxially aligned boltholes 115, 315 between the element's leftmost extremity and the adjacent slot 119. A pair of compression elements 120, 131 is then secured to each tension element 111 with engaging fasteners 333 through coaxially aligned boltholes 115, 215.

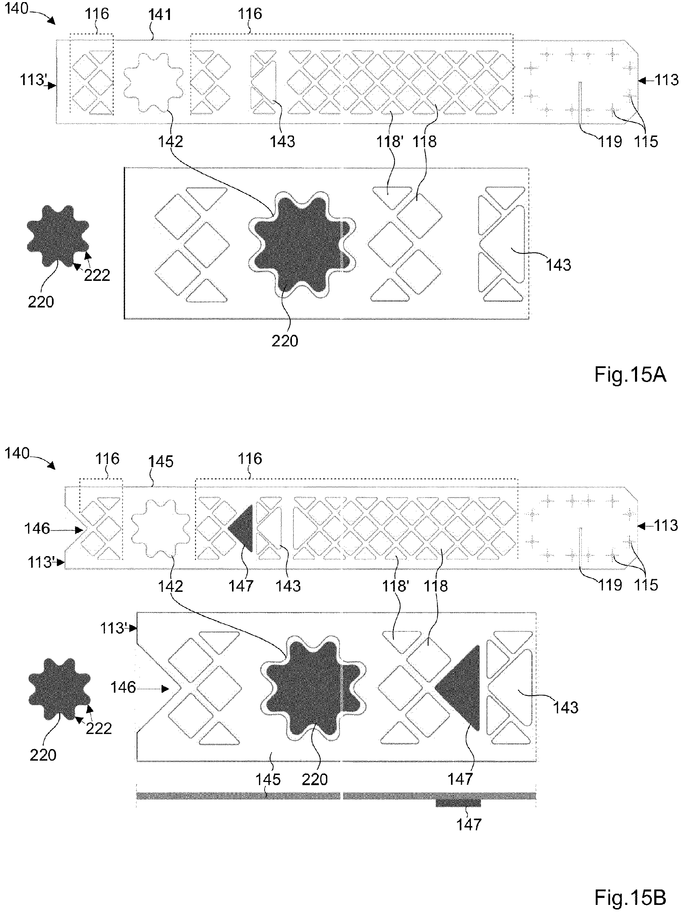

With reference to Figures 15A to 16B now, wherein like numerals reference like features, further embodiments of a modular structural component 140 and a bridging member 220 are described, for spanning a distance with two or more modular structural components arranged in a line.

The modular structural component 140 comprises a tension element 141 and a pair of compression elements 160, 170. Main aspects of the tension element 141 correspond substantially to those of tension element 111 as previously described, inclusive of a mesh 116 of through-apertures of different geometrical shapes 118, 118' and at least one extremity 113 configured with through-bores 115 and a slot 119 for use e.g. with a foot member 300 interfacing the element with an underlying supporting surface.

The bridging member now comprises a gear member 220 with a number of cogs 222, in the example 8 cogs distributed equidistantly about the periphery of the substantially circular gear. The gear is substantially planar, has an outside diameter of at least half the height h of a tension element and has a transversal dimension, or thickness, corresponding substantially to the transversal dimension, or thickness, of two tension elements 141 side by side.

The tension element 141 further comprises a through-aperture 142 dimensioned to lodge the gear 220 therein complementarily, comprising a substantially circular shape with a scalloped edge consisting of successive curves, each shaped to lodge a respective cog 222 in use. This gear through-aperture 142 is located proximate the opposed extremity 113' of the tension element 141, intermediate a main portion of the mesh 116 and a distal portion of the mesh adjacent the opposed extremity 113'.

The main portion of the mesh 116 comprises at least one through-aperture 143 of a still different geometrical shape, particularly an isosceles triangle 143 having its apex coinciding with the main longitudinal axis of the element and oriented towards the opposed extremity 113'.

In a simple embodiment of the tension element 141 shown in Figure 15A, the opposed extremity 113' is plain. In an alternative embodiment 145 of the tension element 141 shown in Figure 15B, the opposed extremity 113' is cut-off inwardly, over substantially half of its height h, in the shape of an isosceles triangle 146 having its apex coinciding with the main longitudinal axis of the element, thus oriented away from the opposed extremity 113'. A lateral face of the tension element 145 in this embodiment comprises a flanged geometrical shape, namely an isosceles triangle 147 having its apex coinciding with the main longitudinal axis of the element and oriented towards the opposed extremity 113', and which is dimensioned complementarily with the triangle cut-off portion 146 of the element extremity 113'.

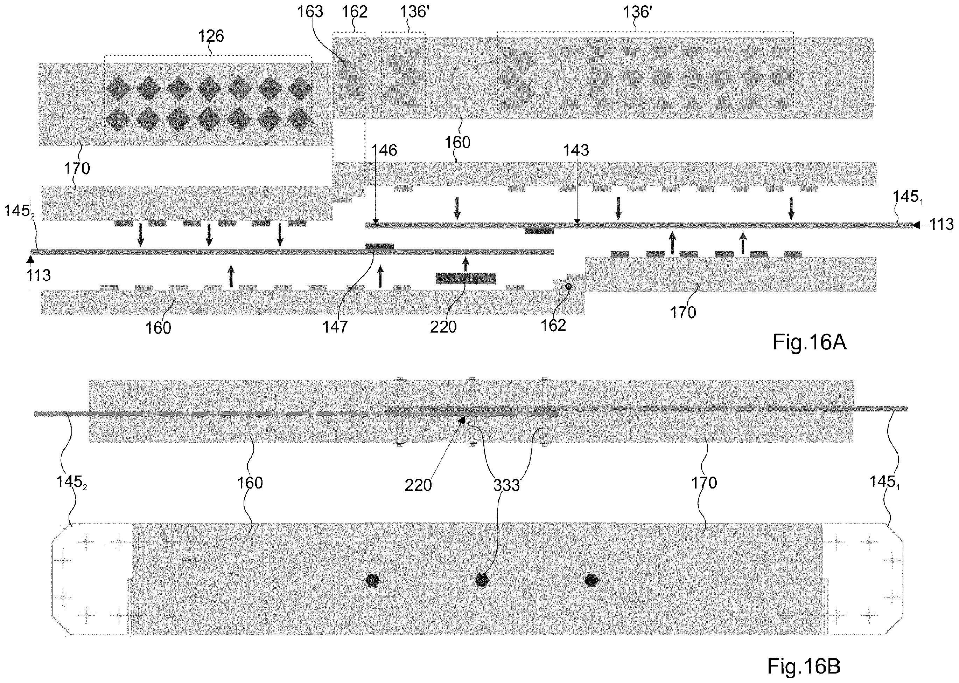

The flanged triangle 147 is located at an end of the main mesh portion 116 adjacent the gear through aperture 142 whereby, with reference to Figure 16A now, when two tension elements 145_{1,2} are assembled in a structural line, their respective faces configured with a flanged triangle 147 are initially oriented in opposition one to the other, the flanged triangle 147 of each tension element 145_{1,2} is then collocated with the triangle cut-off portion 146 of the opposite tension element 145_{,2,1}, and is then engaged therein as the tension elements 145_{1,2} are pressed together. The respective gear through-apertures 142 of the two tension elements 145_{1,2} are collocated in transversal alignment, wherein the gear 220 is then engaged therein, connecting each tension element 145 to the other in addition to the dual connection by elements-respective flanged triangles 147 and cut-off portions 146.

Turning now to compression elements 160, 170 for use with the tension elements 141, 145, and with reference to Figures 16A and 16B, a longitudinal face of a first compression element type 160 comprises a pattern 136' of studs 128, 138 of differing geometrical shapes as previously described with reference to Figure 4. The pattern 136' is split between a main portion and a distal portion, each dimensioned to collocate respectively with the main and distal portions of the tension element mesh 116, on either side of a plain section collocating against the gear 220 when in position within the gear through-aperture 142.

The distal portion of the pattern 136' is located adjacent an end section 162 of the compression element 160, which is configured to project a short distance beyond the extremity 113' of the tension element to which it is secured and towards the next tension element in the structural line, and to form a transversal dogleg towards the longitudinal face bearing the pattern 136', i.e. to project parallel to the studs 138 towards the tension element 145, by a distance corresponding to the thickness of a tension element.

A longitudinal face of the end section 162 parallel to, but not coplanar with, the longitudinal face bearing the pattern 136' is configured with an isosceles triangle stud 163, having its apex coinciding with the main longitudinal axis of the compression element 160 and oriented towards the pattern 136', and which is dimensioned complementarily with the triangle through-aperture 143 of a tension element.

The second compression element type 170 comprises a pattern 126 of rhomboid studs 128 as previously described with reference to Figure 4 and is shorter in length relative to the first type of compression element type 160, allowing for the longitudinal distance of the dogleg end portion 162 of the first compression element type 160 projecting beyond the extremity 113' of a tension element 141, 145 in use.

When two tension elements 145_{1,2} are assembled in a structural line and a compression element 160 is abutted to a first 145₁ for securing thereto, the dogleg in the end section 162 facing the first tension element 145₁ gets abutted against its extremity 113' proximate the second tension element 145₂, whereby the triangle stud 163 is collocated with the triangle through-aperture 143 of the second tension element 145₂ and then gets engaged therein, likewise the pattern 136' of studs 128, 138 into the mesh 116 of through apertures 118, 118', as the compression element 160 is secured to that first tension element 145₁. The second type of compression element 170 is then abutted to the second tension element 145₂ on the same side as the first compression element 160 engaged with the first tension element 145₁ and its pattern 126 of studs 128 gets engaged into the mesh 116 of through apertures 118, 118' of that second tension element 145₂. This assembly of compression components 160, 170 is repeated on the opposite side of the aligned tension elements 145_{1,2} and fasteners 333 are preferably engaged in through-bores 115, at least one of which may engage the gear 210 centrally as shown in Figure 16B, and tightened.

The skilled reader will also appreciate from the present disclosure that the inventive principles explained in relation to a beam- or girder-like element 100 of the type described with reference to Figures 1 to 16B, transfer readily to a column-like element. Embodiments of such modular structural components are now described, wherein each maintains the principle of combining an elongate tension core incorporating a mesh of through-apertures, with elongate compression elements incorporating complementary patterns of studs for engaging the through-apertures.

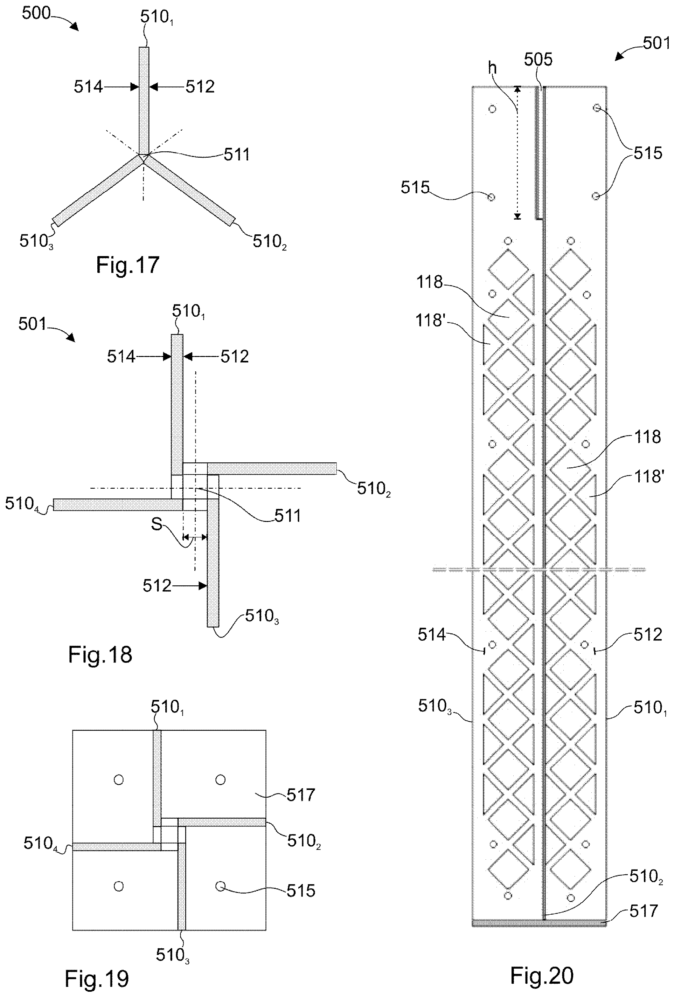

With reference to Figure 17, a first embodiment of a modular structural component 500 specifically designed for use as a column is shown, which comprises three tension elements 510₁₋₃, wherein each is arranged parallel and equidistantly from the others, symmetrically about a common longitudinal axis 511. Each tension element 510₁₋₃ is again rectilinear and substantially planar, having opposed longitudinal faces 512, 514 and a mesh of through-apertures, e.g. the mesh 116 of rhomboidal through-apertures 118.

This configuration, in which the angle between longitudinal faces of adjacent tension elements is substantially 120 degrees, advantageously balances the distribution of stress forces in use, and may be used to support between one and up to three modular structural components used as beams or girders 100,101, represented by dotted lines in Figure 17. This configuration imposes a honeycomb-like approach to the design of structural systems for bracing extended areas, requiring several supporting columns.

With reference to Figures 18 to 25D next, wherein like numerals reference like features, further embodiments of a modular structural component configured for use as a post are shown, wherein tension elements are configured for gravity-based engagement with up to four structural components of the beam type defining an orthogonal cross centred about the common axis 511.

Modular structural components 501 in such embodiments comprise four tension elements 510₁₋₄, wherein each is arranged relative to the others and the common longitudinal axis 511, as previously described with reference to Figure 17, but is non-coplanar relative to the others. This configuration principle results in two pairs of parallel tension elements 510_{1,3} - 510_{2,4}, wherein each element e.g. 510, in a pair 510_{1,3} is longitudinally offset relative to the other 510₃, orthogonally to the elements of the other pair 510_{2,4}, wherein the angle between longitudinal faces of adjacent tension elements is substantially 90 degrees. In this example, the dimension S by which the elements of a pair are offset, corresponding to the distance between the respective planes of the closest respective faces 512 of the elements in the pair, is substantially twice the width or thickness w1 of a tension element 101 between its opposed longitudinal faces 112, 114.

In these embodiments, an end portion of each tension element 510₁₋₄ is configured as a mounting section for securing that tension element to another modular structural component, e.g. a beam component 101, orthogonally to the common longitudinal axis 511. The configuration comprises cutting off an oblong end portion of each tension element 510₁₋₄ adjacent the common longitudinal axis 511, thereby defining an open and box-sectioned space 505 at an end of the component, wherein the space is centred about the common longitudinal axis. A length of the cut-off portion, in a direction parallel to a main axis of the component 510, is substantially the height *h* a tension element 101 and a width of the cut-off portion, in a direction orthogonal to the main axis of the component, is substantially the offset dimension *S*.

The configuration in these examples is enhanced with the provision of boltholes 515 proximate the cut off end portion of the component 501, in a pattern co-locating them in use with the respective boltholes 115 of a tension element 111 of a beam component 101, specifically the end portion of the beam tension element remaining clear of the compression elements 120, 131 after their respective securing thereto. In these embodiments still, the opposed end portion of each tension element 510₁₋₄ distal the oblong cut-off portion is secured to a base plate 517 orthogonal to the common axis 511 as a footing for the column component 501. Boltholes 515 may again be configured with a cross-shape to provide a constrained degree of freedom of horizontal translation to the component 501, similarly to the through-holes 335 described with reference to Figure 13B.

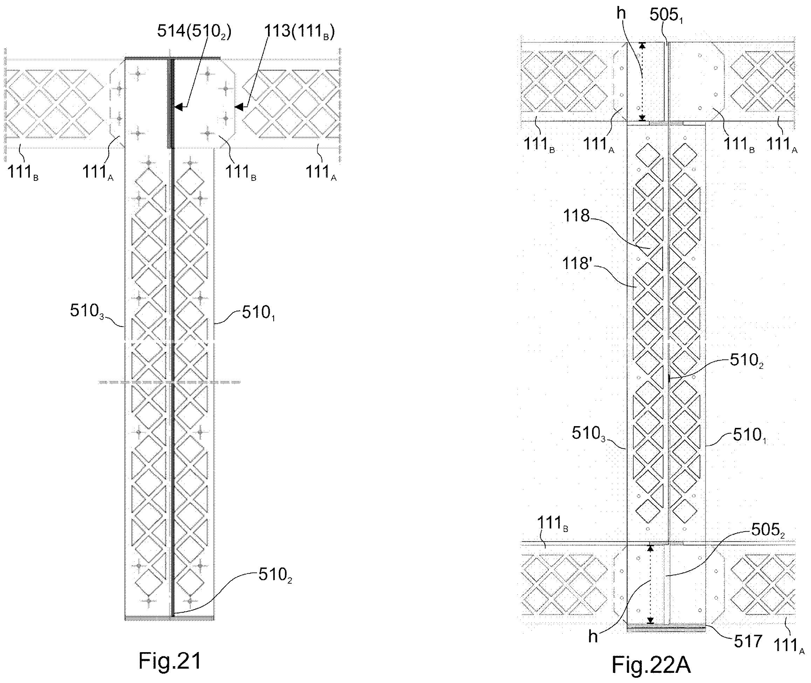

The open and box-sectioned space at the upper extremity of the column 501 advantageously provides a through-passage for the end portion of up to four beam structural component 101, each from a direction corresponding to the main plane of a respective tension element 510₁₋₄ of the column component 501, orthogonally to its main axis 511. Figure 21 best shows how the offset dimension between parallel tension elements 510_{2,4} of an offset pair permits two tension elements 111_{A,B} to cross each other from opposed directions between the beam component pair. The end portion of each beam structural component 100_{A,B} forward of the compression elements straddles the full width of the column component 500 orthogonally to the other offset pair of parallel tension elements 510_{1,3} with the slot 119 substantially aligned with the oblong space, whereby the portion of each beam structural component 100_{A,,B} between its slot 119 and its lateral edge 113 projects on the other side of the orthogonal tension element 510_{2,4} closest to it.

When the design of a structural system requires four modular beams 101 to cross each other at the level of the modular column 501, an end portion of each tension element 111 in a first pair of modular beams crossing each other from opposed directions (e.g. 100_{A,B}) is configured with a slot 119 as described with reference to Figure 3, but extending from the opposed longitudinal edge of the element, i.e. uppermost in use. In use, this first pair is engaged in, and upward-facing slots 119 thereof are aligned with, the space 505 as previously described with reference to Figure 21. The respective end portions of the tension elements 111 of the second pair of modular beams crossing each other from opposed directions, i.e. orthogonally to the first pair, are then engaged in, and slots thereof are aligned with, the space 505 as previously described with reference to Figure 21, whereby these slots further engage into the upwardly-open slots of the first pair, achieving a gravity-based interlock.

An alternative embodiment of the modular column component 501 shown in Figures 20 and 21 is shown in Figure 22A, wherein like numerals reference like features. This embodiment comprises a plurality of box-sectioned spaces 505₁₋₂, for use in structural applications requiring more load transferring onto the column member by additional beam components. The principle of multiple locations for load transfer onto column components of the invention can be declined according to load bearing requirements of buildings and/or the overall length of the column component, to embodiments with alternative and/or additional locations for the multiple box-sectioned spaces 505.

In the column component 521 shown in Figure 22A, the opposed end portions of each tension element 510₁₋₄ are configured as respective mounting sections for securing the column tension element to a plurality of beam tension elements. The configuration of the upper extremity of the column component 521 is as previously described with reference to Figures 20 and 21, defining the open and box-sectioned space 505₁. In this embodiment, the configuration of the lower extremity of the column component 521 resting upon the base 517 replicates the configuration of the upper extremity, thus defining a second oblong box-sectioned space 505₂ extending from the top surface of the base plate 517 in a direction parallel to a main axis of the component 521, by substantially the height h of a tension element 101 and wherein a width of each cut-off portion, in a direction orthogonal to the main axis of the component, is again substantially the offset dimension S. The lower extremity of the column component 521 advantageously provides a second through-passage for the respective end portions of up to four more beam structural components 101, relative to the embodiment of Figures 20 and 21.

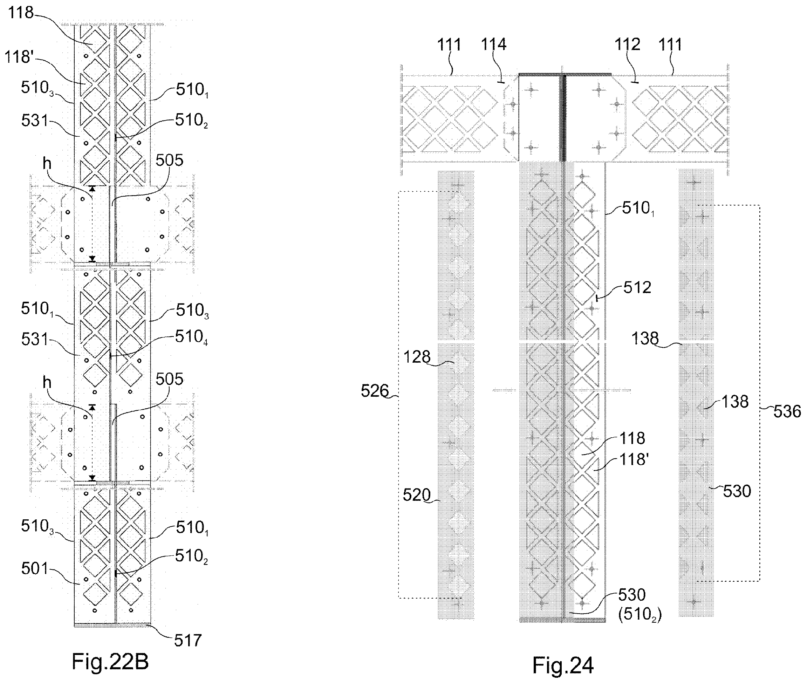

The modular charateristics of column and beam components described herein facilitate their assembly into a wide varity of structural frameworks, including stacked configurations for elevated, multi-storied buildings. Similarly to the longitudinal assembly of beam components shown and described with reference to Figures 15 to 16B, the present invention extends to column components without a base plate 517, designed for longitudinal assembly with other column components 501, 521, an example of which is shown assembled in a system in Figure 22B.

At its simplest, such an embodiment of a column component 531 is configured with four tension element 510₁₋₄ and two oblong spaces 505, all as previously described with reference to Figures 18 to 22A, wherein the configuration of each extremity of the column component 531 is as previously described with reference to Figures 20 and 21, defining an open and box-sectioned space 505.

After siting a first column component 501, a second column component 531 is located atop the first, substantially co-axially therewith but upended 180 degrees relative thereto, i.e. having its respective pairs of offset parallel tension elements 510₁₋₄ in a reverse-hand helix relative to those of the underlying first column 501. In this configuration, the first and second column components are in co-axial alignment, likewise the open and box-sectioned space 505 of the underlying first column 501 with the open and box-sectioned space 505 of the overlying column component 531, however their respective tension elements 510₁₋₄ are inverted and transversally offset relative to one another by the offset dimension S, i.e. and e.g. the tension element 510₂ of the underlying first column 501 is aligned with the tension element 510₄ of the overlying column component 531 but offset relative thereto by the dimension S.

A third column component 531 may then be located atop the second, again substantially co-axially therewith but again upended 180 degrees relative thereto, i.e. having its respective pairs of offset parallel tension elements 510₁₋₄ in a reverse-hand helix relative to those of the underlying second column component 531, thus mirroring the disposition of offset parallel tension elements 510₁₋₄ of the first column component 501. This alternating of orientiation for each successive column component in the overall column advantageously aids in distributing the load and stresses in the structure.

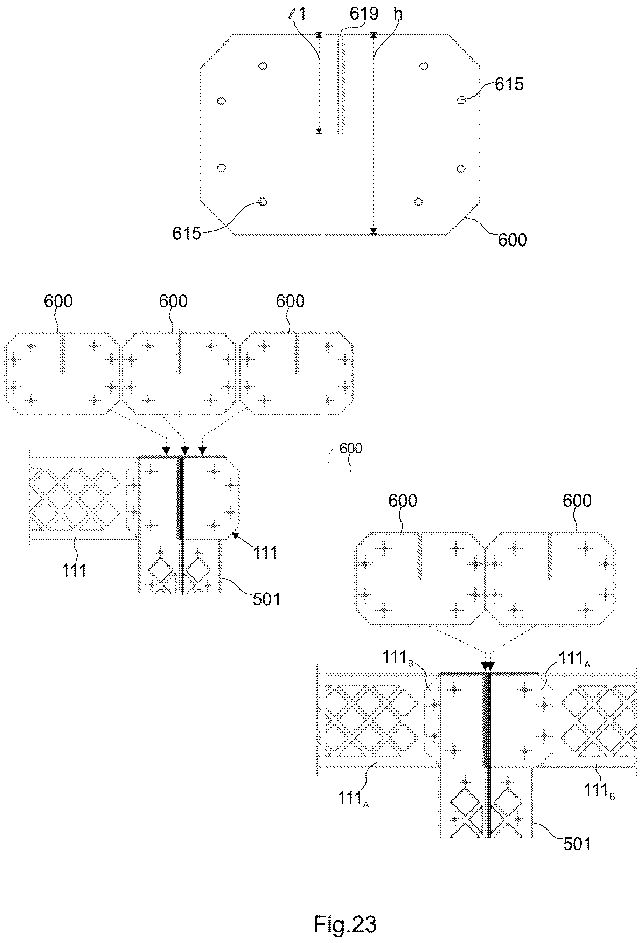

Conversely, with reference to Figure 23 now, when the design of a structural system requires less than four modular beams 101 to cross each other at the level of the modular column 501, one or more key members 600 are used in substitution of the missing tension elements 111 to provide the same interlock.

A key member 600 is accordingly dimensioned to correspond substantially, in its longitudinal, transversal and thickness dimensions, to the end portion of a beam tension element 111 forward of the compression elements, i.e. between the mesh of through apertures and the transversal edge 113. The key member comprises boltholes 615 in a pattern co-locating them in use with the respective boltholes 115 of a tension element 111 of a beam component 101, specifically the end portion of the beam tension element remaining clear of the compression elements 120, 131 after their respective securing thereto.

The key member 600 further comprises a slot 619 extending from a longitudinal edge, centrally of it and orthogonally thereto, having the same length *l1* corresponding to substantially half the transversal dimension, or height, of the beam tension element 111 and the same width *w1,* i.e. half of *S*.

Subject to the configuration of modular beams and modular columns required in a modular system by a structural application, a modular column 501 may therefore support a single modular beam, respective ends of a pair of modular beams in a line or forming an orthogonal a corner, three modular beams forming a T corner, or four modular beams forming an orthogonal cross. In use, up to 3 key members 600 may therefore be used to occupy the balance of the space 505 in the column component 501 that is not occupied by a traversing tension element 111 of a supported beam component 101, wherein one or more of these key members 600 may be upended relative to the others, so that its slot 619 is upwardly open to interlock with a slot 619, 119 of another key or beam tension element 111.

With reference to Figure 24 now, irrespective of the arrangement of horizontal modular structural component(s) 100, 111 supported by a vertical modular structural component(s) 500, 501, each longitudinal face 512, 514 of each tension element 510_{1-N} of that vertical modular structural component must be dressed with a respective pair of compression elements 520, 530 according to the principles described herein, for the vertical modular structural component to acquire its load bearing capacity.

Accordingly, a longitudinal face 522, 532 of each compression element in a pair 520, 530 intended for securing against the respective face 512, 514 of a tension element 510_{N} comprises a respective pattern 526, 536 of studs 128 (138) wherein each compression element is formed, and each stud thereof is shaped, complementarily with the mesh e.g. 116' for engaging a respective through-aperture 118, 118' thereof. Six compression elements are therefore required for the embodiment described with reference to Figure 17, and eight for the embodiments described with reference to Figures 18 to 25D.

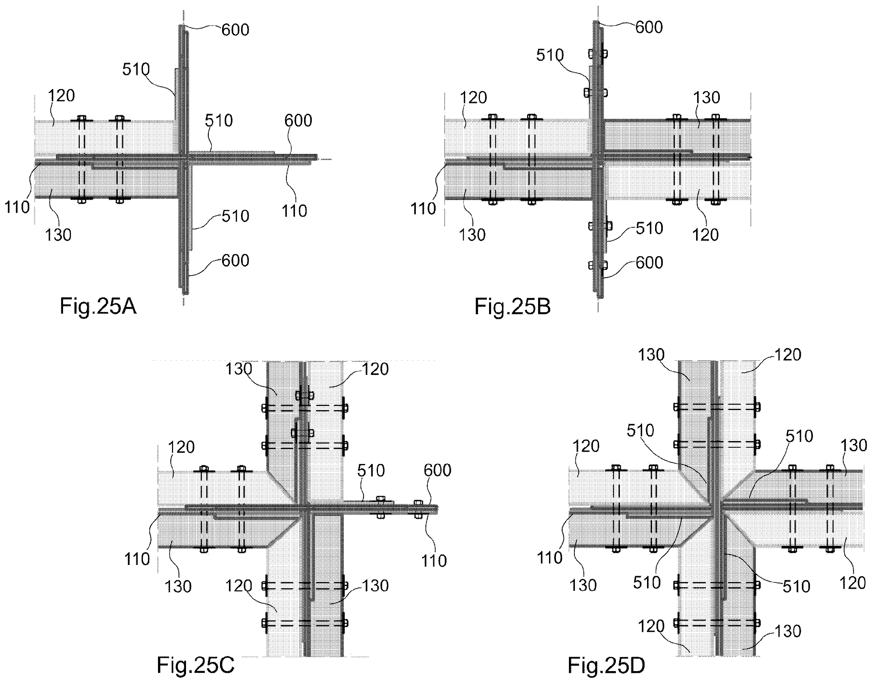

A chamfering of a longitudinal and/or transversal edge of a compression element 120,130,131,520,530 is considered, whenever longitudinal and/or transversal edges of respective and adjacent tension components form an angle one relative to the other, and to which a respective compression element is secured in use. Figures 25A to 25D illustrate an upright modular structural component 501 supporting, respectively, a single beam component 100, a pair of beam components symmetrically aligned, three beam components forming a T and four beam components forming a cross. Transversal edges of compression elements 120,130 of the or each beam component 100 are shown in each situation, with a 45 degree chamfer whenever the or each compression element 120, 130 forms a right angle with an adjacent compression element 120, 130 of an adjacent beam component.

For any of the embodiments described, the tension element can be manufactured from one or more material(s) with conventional techniques such as laser or plasma cutting or milling of a blank, or more recent techniques involving additive printing. The one or more material(s) is selected from steel, iron, aluminium, copper, nickel, zinc, lead, brass, bronze, tin, chromium, titanium, tungsten, bismuth and niobium; from alloys thereof such as stainless steel, hardened steel, carbon steel, engineering steel, wrought iron, nitinol and elinvar; and from composite materials with relevant properties.

The compression element can be manufactured from one or more organic, composite and/or processed material(s) with conventional techniques, such as cutting to shape a blank of organic material like natural wood or semi-organic and/or processed material like Glulam, or again recent techniques involving additive printing and e.g. sawdust. The one or more organic, composite and/or processed material(s) is selected from natural or laminated wood e.g. plywood, compressed sawdust, fibre-reinforced composites, natural fibre composites, concrete, fibre-reinforced concrete, Ethylene Propylene Diene Monomer ('EPDM') rubber and clay.

It will be readily understood by the skilled person that materials are described herein by way of non-limitative examples, and that the tension and compression elements of the invention are capable of manufacture with any material, known or yet to be developed, exhibiting the requisite degree of resistance to tension, respectively compression, forces and stresses.

The invention thus provides a modular structural component, the composition of which is not a single and homogeneous material, but a combination of at least two specific materials working in conjunction, resulting in component properties similar to those of reinforced concrete. The modular of the structural components facilitates their transport to building or renovation sites, where they can then be assembled into finished products.

Embodiments of the modular structural component can be used individually, as independent building elements, or they can be combined in a bracing system consisting of at least one modular structural component and at least one bridging member, to interface the beam with another beam and/or with an existing structure. Embodiments of the components can interlock together, permitting them to work as one homogenous entity, and are designed to transfer a safe load-bearing of the relevant tension and compression stresses on to the structure.

## Claims

1. A modular structural component comprising
an elongate tension element (510, 111) comprising opposed faces and a mesh of through-apertures (118); and
a pair of elongate compression elements (120, 130, 520, 530), each for securing to a respective face of the tension element,
wherein a face of each compression element comprises a pattern of studs (128, 138),
wherein each pattern is formed and each stud thereof is shaped for engaging a respective through-aperture of the mesh,
wherein the modular structural component is a beam or a column and
wherein the beam or column comprises at least three tension elements, and wherein each tension element is arranged parallel and equidistantly from the other tension elements, symmetrically about a common longitudinal axis.

2. The modular structural component according to claim 1, wherein the through-apertures comprise at least two different geometrical shapes.

3. The modular structural component according to claim 2, wherein studs of a first compression element of the pair thereof comprise a first geometrical shape and studs of a second compression element of the pair thereof comprise a second geometrical shape.

4. The modular structural component according to any of claims 1 to 3, wherein at least one through-aperture of the tension element and at least one stud of at least one compression element comprise an isosceles triangle having its apex coinciding with a main longitudinal axis of the element.

5. The modular structural component according to claim 1, wherein the tension element further comprises a pair of slots (119) extending from a same longitudinal edge and orthogonally thereto, each slot located adjacent a respective end of the tension element.

6. The modular structural component according to claim 1, comprising four tension elements, wherein each tension element is non-coplanar relative to another, thereby defining two pairs of parallel and offset tension elements, each pair orthogonal to the other.

7. The modular structural component according to claim 6, wherein at least one end of each tension element is configured with a mounting section coplanar with the tension element, for securing to another modular structural component thereto, orthogonally to the common longitudinal axis.

8. The modular structural component according to claim 6 or 7, wherein an oblong portion of each tension element is cut off adjacent the common longitudinal axis by a first dimension corresponding to a height (h) of the tension element and by a second dimension corresponding to a thickness (w1) of the tension element, thereby defining a box-sectioned space in the component wherein the space is centred about the common longitudinal axis and tension element.

9. A modular structural system comprising
at least one modular structural component according to claim 1 and
at least one substantially planar bridging member (200) configured to connect the or each modular structural component to another modular structural component; and /or
at least one foot member (300) comprising at least one mounting section extending orthogonally from a base plate along a main axis thereof, the foot member locating, in use, intermediate an underside of the modular structural component and a surface underlying the modular structural component.

10. The modular structural system according to claim 9, wherein the bridging member comprises a set of mounting faces, wherein either mounting face is securable to an end portion of the modular structural component in use.

11. The modular structural system according to claim 10, wherein the bridging member comprises a pair of symmetrical mounting plates, each mounting plate comprising a respective mounting face.

12. The modular structural system according to claim 11, wherein opposed longitudinal edges of each mounting face of the bridging member are flanged, each flange extending outwardly of the member by a dimension corresponding to a thickness of the compression component.

13. The modular structural system according to claim 9, wherein the bridging member comprises a gear member (220), the tension element of the or each modular structural component comprises a through-aperture (142) dimensioned to lodge the gear member, and a transversal dimension of the gear member is substantially twice a transversal dimension of the tension element.

14. The modular structural system according to claim 9, wherein the base plate comprises a plurality of through-holes for engaging fasteners into the underlying surface therethrough, and wherein each through-hole is configured to provide a constrained degree of freedom of horizontal translation to the base plate, relative to a fastener engaged therein.

15. A method of manufacturing a modular structural component according to claim 1, comprising the steps of:
obtaining an electronic file representing a configuration of a product, including a surface configuration or volume configuration of the product, wherein the product is the tension element and/or the compression element; and
controlling an additive manufacturing apparatus to manufacture, over one or more additive manufacturing steps, the product according to the configuration of the product represented in the electronic file.

## Patentansprüche

1. Modulares Strukturbauteil, umfassend
ein längliches Zugelement (510, 111), das gegenüberliegende Flächen und ein Netz aus Durchgangsöffnungen (118) umfasst; und
ein Paar länglicher Druckelemente (120, 130, 520, 530), jeweils zum Befestigen an einer jeweiligen Seite des Zugelements,
wobei eine Seite jedes Druckelements ein Muster aus Bolzen (128, 138) umfasst,
wobei jedes Muster so gebildet ist und jeder Bolzen darauf so geformt ist, dass er in eine entsprechende Durchgangsöffnung des Netzes eingreift,
wobei es sich bei dem modularen Strukturbauteil um einen Balken oder eine Säule handelt, und
wobei der Balken oder die Säule mindestens drei Zugelemente umfasst, wobei jedes Zugelement parallel und im gleichen Abstand zu den anderen Zugelementen symmetrisch um eine gemeinsame Längsachse angeordnet ist.

2. Modulares Strukturbauteil nach Anspruch 1, wobei die Durchgangsöffnungen mindestens zwei verschiedene geometrische Formen aufweisen.

3. Modulares Strukturbauteil nach Anspruch 2, wobei Bolzen eines ersten Druckelements des Paares davon eine erste geometrische Form umfassen und Bolzen eines zweiten Druckelements des Paares davon eine zweite geometrische Form aufweisen.

4. Modulares Strukturbauteil nach einem der Ansprüche 1 bis 3, wobei mindestens eine Durchgangsöffnung des Zugelements und mindestens ein Bolzen mindestens eines Druckelements ein gleichschenkliges Dreieck umfassen, dessen Spitze mit einer Hauptlängsachse des Elements übereinstimmt.

5. Modulares Strukturbauteil nach Anspruch 1, wobei das Zugelement weiter ein Paar von Schlitzen (119) umfasst, die sich von einer gleichen Längskante und orthogonal dazu erstrecken, wobei jeder Schlitz angrenzend zu einem jeweiligen Ende des Zugelements gelegen ist.

6. Modulares Strukturbauteil nach Anspruch 1, umfassend vier Zugelemente, wobei jedes Zugelement nicht koplanar zueinander ist, wodurch zwei Paare paralleler und versetzter Zugelemente definiert werden, wobei jedes Paar orthogonal zum anderen ist.

7. Modulares Strukturbauteil nach Anspruch 6, wobei mindestens ein Ende jedes Zugelements mit einem Befestigungsabschnitt konfiguriert ist, der koplanar mit dem Zugelement ist, um es orthogonal zur gemeinsamen Längsachse an einem anderen modularen Strukturbauteil daran zu befestigen.

8. Modulares Strukturbauteil nach Anspruch 6 oder 7, wobei ein länglicher Abschnitt jedes Zugelements angrenzend zu der gemeinsamen Längsachse durch eine erste Abmessung, die einer Höhe (h) des Zugelements entspricht, und durch eine zweite Abmessung, die einer Dicke (w1) des Zugelements entspricht, abgeschnitten ist, wodurch ein kastenförmiger Raum im Strukturbauteil definiert wird, wobei der Raum um die gemeinsame Längsachse und das Zugelement zentriert ist.

9. Modulares Struktursystem, umfassend
mindestens ein modulares Strukturbauteil nach Anspruch 1 und
mindestens ein im Wesentlichen ebenes Brückenelement (200), das so konfiguriert ist, dass es das oder jedes modulare Strukturbauteil mit einem anderen modularen Strukturbauteil verbindet; und/oder
mindestens ein Fußelement (300), das mindestens einen Montageabschnitt umfasst, der sich orthogonal von einer Grundplatte entlang einer Hauptachse davon erstreckt, wobei das Fußelement im Gebrauch zwischen einer Unterseite des modularen Strukturbauteils und einer unter dem modularen Strukturbauteil liegenden Oberfläche positioniert ist.

10. Modulares Struktursystem nach Anspruch 9, wobei das Brückenelement eine Reihe von Montageflächen umfasst, wobei jede Montagefläche in Gebrauch an einem Endabschnitt des modularen Strukturbauteils befestigt werden kann.

11. Modulares Struktursystem nach Anspruch 10, wobei das Brückenelement zwei symmetrische Montageplatten umfasst, wobei jede Montageplatte eine jeweilige Montagefläche umfasst.

12. Modulares Struktursystem nach Anspruch 11, wobei gegenüberliegende Längskanten jeder Montagefläche des Brückenelements mit Flanschen versehen sind, wobei sich jeder Flansch um eine Abmessung, die einer Dicke des Druckbauteils entspricht, vom Element nach außen erstreckt.

13. Modulares Struktursystem nach Anspruch 9, wobei das Brückenelement ein Zahnradelement (220) umfasst, wobei das Zugelement des oder jedes modularen Strukturbauteils eine Durchgangsöffnung (142) umfasst, die zum Aufnehmen des Zahnradelements dimensioniert ist, und wobei eine Querabmessung des Zahnradelements im Wesentlichen das Doppelte einer Querabmessung des Zugelements beträgt.

14. Modulares Struktursystem nach Anspruch 9, wobei die Grundplatte eine Vielzahl von Durchgangslöchern zum Eingreifen in Befestigungselemente in die darunter liegende Oberfläche umfasst, und wobei jedes Durchgangsloch so konfiguriert ist, dass es der Grundplatte in Bezug auf ein darin eingegriffenes Befestigungselement einen begrenzten Freiheitsgrad der horizontalen Verschiebung bereitstellt.

15. Verfahren zur Herstellung eines modularen Strukturbauteils nach Anspruch 1, umfassend die folgenden Schritte:
Erhalten einer elektronischen Datei, die eine Konfiguration eines Produkts darstellt, einschließlich einer Oberflächen- oder Volumenkonfiguration des Produkts, wobei das Produkt das Spannungselement und/oder das Druckelement ist; und
Steuern einer Einrichtung zum additiven Fertigen zur Fertigung des Produkts in einem oder mehreren additiven Fertigungsschritten gemäß der in der elektronischen Datei dargestellten Produktkonfiguration.

## Revendications

1. Composant structurel modulaire comprenant
un élément de tension allongé (510,111) comprenant des faces opposées et un maillage d'ouvertures traversantes (118) ; et
une paire d'éléments de compression allongés (120, 130, 520, 530), chacun destiné à être fixé à une face respective de l'élément de tension,
dans lequel une face de chaque élément de compression comprend un motif de goujons (128, 138),
dans lequel chaque motif est formé et chaque goujon correspondant est façonné pour s'engager dans une ouverture traversante respective du maillage,
dans lequel le composant structurel modulaire est une poutre ou une colonne et
dans lequel la poutre ou la colonne comprend au moins trois éléments de tension, et dans lequel chaque élément de tension est agencé parallèlement et à égale distance des autres éléments de tension, symétriquement autour d'un axe longitudinal commun.

2. Composant structurel modulaire selon la revendication 1, dans lequel les ouvertures traversantes comprennent au moins deux formes géométriques différentes.

3. Composant structurel modulaire selon la revendication 2, dans lequel les goujons d'un premier élément de compression de la paire comprennent une première forme géométrique et les goujons d'un second élément de compression de la paire comprennent une seconde forme géométrique.

4. Composant structurel modulaire selon l'une quelconque des revendications 1 à 3, dans lequel au moins une ouverture traversante de l'élément de tension et au moins un goujon d'au moins un élément de compression comprennent un triangle isocèle dont le sommet coïncide avec un axe longitudinal principal de l'élément.

5. Composant structurel modulaire selon la revendication 1, dans lequel l'élément de tension comprend en outre une paire de fentes (119) s'étendant à partir d'un même bord longitudinal et orthogonalement à celui-ci, chaque fente étant située à proximité d'une extrémité respective de l'élément de tension.

6. Composant structurel modulaire selon la revendication 1, comprenant quatre éléments de tension, dans lequel chaque élément de tension est non coplanaire par rapport à un autre, définissant ainsi deux paires d'éléments de tension parallèles et décalés, chaque paire étant orthogonale à l'autre.

7. Composant structurel modulaire selon la revendication 6, dans lequel au moins une extrémité de chaque élément de tension est configurée avec une section de montage coplanaire avec l'élément de tension, pour la fixation à un autre composant structurel modulaire, orthogonalement à l'axe longitudinal commun.

8. Composant structurel modulaire selon la revendication 6 ou 7, dans lequel une partie oblongue de chaque élément de tension est coupée à proximité de l'axe longitudinal commun par une première dimension correspondant à une hauteur (h) de l'élément de tension et par une seconde dimension correspondant à une épaisseur (w1) de l'élément de tension, définissant ainsi un espace à section en forme de boîte dans le composant, dans lequel l'espace est centré sur l'axe longitudinal commun et l'élément de tension.

9. Système structurel modulaire comprenant
au moins un composant structurel modulaire selon la revendication 1 et
au moins un élément de liaison sensiblement plan (200) configuré pour relier chaque composant structurel modulaire à un autre composant structurel modulaire ; et /ou
au moins un élément de pied (300) comprenant au moins une section de montage s'étendant orthogonalement à partir d'une plaque de base le long d'un axe principal de celle-ci, l'élément de pied se situant, en utilisation, entre une face inférieure du composant structurel modulaire et une surface sous-jacente au composant structurel modulaire.

10. Système structurel modulaire selon la revendication 9, dans lequel l'élément de pontage comprend un ensemble de faces de montage, dans lequel chaque face de montage peut être fixée à une partie d'extrémité du composant structurel modulaire utilisé.

11. Système structurel modulaire selon la revendication 10, dans lequel l'élément de pontage comprend une paire de plaques de montage symétriques, chaque plaque de montage comprenant une face de montage respective.

12. Système structurel modulaire selon la revendication 11, dans lequel les bords longitudinaux opposés de chaque face de montage de l'élément de pontage sont munis de brides, chaque bride s'étendant vers l'extérieur de l'élément d'une dimension correspondant à une épaisseur du composant de compression.

13. Système structurel modulaire selon la revendication 9, dans lequel l'élément de pontage comprend un élément d'engrenage (220), l'élément de tension de chaque composant structurel modulaire comprend une ouverture traversante (142) dimensionnée pour loger l'élément d'engrenage, et une dimension transversale de l'élément d'engrenage est sensiblement le double d'une dimension transversale de l'élément de tension.

14. Système structurel modulaire selon la revendication 9, dans lequel la plaque de base comprend une pluralité de trous traversants pour engager des éléments de fixation dans la surface sous-jacente à travers celle-ci, et dans lequel chaque trou traversant est configuré pour fournir un degré de liberté contraint de translation horizontale à la plaque de base, par rapport à un élément de fixation engagé dans celle-ci.

15. Procédé de fabrication d'un composant structurel modulaire selon la revendication 1, comprenant les étapes de :
obtention d'un fichier électronique représentant la configuration d'un produit, incluant sa configuration de surface ou sa configuration volumique, dans lequel le produit est l'élément de tension et/ou l'élément de compression ; et
commande d'un appareil de fabrication additive pour fabriquer, en une ou plusieurs étapes de fabrication additive, le produit selon la configuration du produit représentée dans le fichier électronique.
